# EUROPÄISCHE PATENTSCHRIFT

(11) **EP 4 380 844 B1**
(45) Veröffentlichungstag und Bekanntmachung des Hinweises auf die Patenterteilung: **04.06.2025**
(21) Anmeldenummer: 22733092.5
(22) Anmeldetag: 14.06.2022
(51) Int. Cl.: B62D 5/04

(54) **VERFAHREN ZUR ÜBERWACHUNG EINES LENKSYSTEMS**
METHOD FOR MONITORING A STEERING SYSTEM
PROCÉDÉ DE SURVEILLANCE D'UN SYSTÈME DE DIRECTION

(30) Priorität: 05.08.2021 DE 102021208486
(43) Veröffentlichungstag der Anmeldung: 12.06.2024
(73) Patentinhaber: Robert Bosch GmbH, 70442 Stuttgart (DE)
(72) Erfinder: HEILIG, Arnulf, 73527 Schwaebisch Gmuend (DE); EBERT, Patrick, 91731 Langfurth (DE); FRIEDEL, Michael, 73577 Ruppertshofen (DE)
(86) Internationale Anmeldenummer: PCT/EP2022/066141
(87) Internationale Veröffentlichungsnummer: WO 2023/011788

(56) Entgegenhaltungen:
- DE-A1- 102008 021 849

## Beschreibung

### Stand der Technik

Die Erfindung geht aus von einem Verfahren zur Überwachung eines Lenksystems nach dem Oberbegriff des Anspruchs 1. Zudem betrifft die Erfindung ein Steuergerät mit einer Recheneinheit zur Durchführung eines solchen Verfahrens, ein Lenksystem mit einer Recheneinheit zur Durchführung eines solchen Verfahrens sowie ein Fahrzeug mit einem solchen Lenksystem.

Aus dem Stand der Technik, wie beispielsweise der DE 10 2008 021 849 A1, ist ein Verfahren zur Überwachung eines Lenksystems bekannt, wobei zur Erkennung eines Riemensprungs und folglich eines Kraftschluss- und/oder Drehmomentabrisses im Lenksystem eine Riemensprung-Erkennungsvorrichtung eingesetzt wird, welche durch Auswertung eines am Lenkrad aufgebrachten Handmoments, eines am Lenkrad aufgebrachten Handwinkels und eines Lenkwinkels der Fahrzeugräder bzw. einem Betriebssignal eines Lenkaktuators einen Riemensprung erkennt. Eine Erkennung eines Riemensprungs anhand eines erfassten Handmoments führt jedoch beispielsweise bei autonom fahrenden Fahrzeugen oder bei Steer-by-Wire-Lenksystemen zu Problemen. Zudem wird die Erkennung in diesem Fall durch Systemsteifigkeiten beeinflusst und gegebenenfalls verfälscht.

Die Aufgabe der Erfindung besteht insbesondere darin, ein Verfahren zur Überwachung eines Lenksystems mit verbesserten Eigenschaften hinsichtlich einer Effizienz bereitzustellen. Die Aufgabe wird durch die Merkmale der Ansprüche 1, 10, 11 und 12 gelöst, während vorteilhafte Ausgestaltungen und Weiterbildungen der Erfindung den Unteransprüchen entnommen werden können.

### Offenbarung der Erfindung

Die Erfindung geht aus von einem Verfahren zur Überwachung eines Lenksystems, insbesondere während des Betriebs in einem Fahrzeug, wobei das Lenksystem zumindest einen Lenkaktuator umfasst, und wobei zur Ermittlung eines Kraftschluss- und/oder Drehmomentabrisses im Lenksystem wenigstens ein Betriebssignal des Lenkaktuators ermittelt und ausgewertet wird.

Es wird vorgeschlagen, dass zur Ermittlung des Kraftschluss- und/oder Drehmomentabrisses im Lenksystem aus dem Betriebssignal ein Rucksignal ermittelt und auf Änderungen überwacht wird. Vorteilhaft wird dabei ein zeitlicher Verlauf des Rucksignals, insbesondere über ein gesamtes Überwachungszeitintervall, ermittelt und ausgewertet. Die Auswertung erfolgt dabei vorteilhaft im Zeitbereich. Grundsätzlich könnte das Rucksignal jedoch auch im Frequenzbereich ausgewertet werden. Durch diese Ausgestaltung kann insbesondere eine Effizienz, insbesondere eine Detektionseffizienz, eine Recheneffizienz und/oder eine Kosteneffizienz, verbessert werden. Zudem kann eine vorteilhaft robuste Erkennung und/oder Auswertung eines Kraftschluss- und/oder Drehmomentabrisses im Lenksystem erreicht und eine Betriebssicherheit erhöht werden. Zudem kann eine besonders hohe Flexibilität und/oder Variabilität erreicht werden.

Vorzugsweise ist das Fahrzeug als Kraftfahrzeug ausgebildet und umfasst insbesondere das Lenksystem und eine Erfassungssensorik, welche dazu vorgesehen ist, wenigstens ein Betriebssignal des Lenkaktuators zu erfassen. Ferner kann das Lenksystem vorliegend als konventionelles Lenksystem, insbesondere als elektrische Servolenkung, ausgebildet sein und einen mechanischen Durchgriff umfassen. Alternativ kann das Lenksystem jedoch auch als Steer-by-Wire-Lenksystem ausgebildet sein, bei welchem eine Lenkvorgabe rein elektrisch an die Fahrzeugräder weitergeleitet wird. Ferner soll unter einem "Lenkaktuator" eine zumindest teilweise elektrisch und/oder elektronisch ausgebildete Aktuatoreinheit verstanden werden, welche dazu vorgesehen ist, ein Lenkmoment bereitzustellen und hierdurch vorteilhaft eine Fahrtrichtung des Fahrzeugs zu beeinflussen. Vorzugsweise ist der Lenkaktuator dazu vorgesehen, ein Lenkmoment zur Unterstützung eines an einer Lenkhandhabe aufgebrachten Handmoments und/oder ein Lenkmoment zur selbsttätigen und/oder autonomen Steuerung einer Fahrtrichtung des Fahrzeugs bereitzustellen. Dazu kann der Lenkaktuator wenigstens einen Elektromotor umfassen.

Des Weiteren umfasst das Fahrzeug eine Recheneinheit, welche dazu vorgesehen ist, das Verfahren zur Überwachung des Lenksystems durchzuführen. Unter einer "Recheneinheit" soll insbesondere eine elektrische und/oder elektronische Einheit verstanden werden, welche einen Informationseingang, eine Informationsverarbeitung und eine Informationsausgabe aufweist. Vorteilhaft weist die Recheneinheit ferner zumindest einen Prozessor, zumindest einen Betriebsspeicher, zumindest ein Ein- und/oder Ausgabemittel, zumindest ein Betriebsprogramm, zumindest eine Steuerroutine, zumindest eine Berechnungsroutine, zumindest eine Ermittlungsroutine, zumindest eine Auswerteroutine und/oder zumindest eine Überwachungsroutine auf. Insbesondere ist die Recheneinheit dazu vorgesehen, das Betriebssignal zu ermitteln, insbesondere von der Erfassungssensorik abzurufen und/oder zu empfangen, und auszuwerten. Zudem ist die Recheneinheit dazu vorgesehen, zur Ermittlung des Kraftschluss- und/oder Drehmomentabrisses im Lenksystem aus dem Betriebssignal ein Rucksignal zu ermitteln und auf Änderungen zu überwachen. Vorzugsweise ist die Recheneinheit dabei in ein Steuergerät des Fahrzeugs, beispielsweise ein zentrales Fahrzeugsteuergerät, oder ein Steuergerät des Lenksystems, insbesondere in Form eines Lenkungssteuergeräts, integriert. Unter einem "Kraftschluss- und/oder Drehmomentabriss" soll in diesem Zusammenhang insbesondere eine plötzliche und/oder abrupte Relativbewegung und/oder eine zumindest kurzfristige Unterbrechung und/oder ein Lösen eines Kraftschlusses zwischen zwei kraft- und/oder formschlüssig miteinander verbundenen Bauteilen des Lenksystems verstanden werden. Der Kraftschluss- und/oder Drehmomentabriss führt dabei insbesondere zu einem zumindest kurzfristigen Verlust der Lenkunterstützung. Zudem kann der Kraftschluss- und/oder Drehmomentabriss grundsätzlich auch zu einem Versatz im Lenksystem, insbesondere in einem Sensor- und/oder Servostrang des Lenksystems, führen und demnach beispielsweise einen Versatz zwischen einem gemessenen Lenkwinkel und einem tatsächlichen Lenkwinkel bewirken. Darüber hinaus soll unter einem "Rucksignal" insbesondere ein Signal verstanden werden, welches mit einem im Lenksystem auftretenden Ruck, also einer zeitlichen Änderung einer Beschleunigung, korreliert ist. Unter "vorgesehen" soll insbesondere speziell programmiert, ausgelegt und/oder ausgestattet verstanden werden. Darunter, dass ein Objekt zu einer bestimmten Funktion vorgesehen ist, soll insbesondere verstanden werden, dass das Objekt diese bestimmte Funktion in zumindest einem Anwendungs- und/oder Betriebszustand erfüllt und/oder ausführt.

Ferner wird vorgeschlagen, dass der Kraftschluss- und/oder Drehmomentabriss im Lenksystem anhand wenigstens einer Signalspitze, insbesondere anhand eines Peaks, im Rucksignal ermittelt wird, wodurch insbesondere eine besonders einfache Erkennung eines kurzfristigen Kraftschluss- und/oder Drehmomentabrisses im Lenksystem, wie beispielsweise eines Durchrutschens und/oder eines Sprungs, erreicht werden kann.

Alternativ oder zusätzlich wird vorgeschlagen, dass der Kraftschluss- und/oder Drehmomentabriss im Lenksystem ermittelt wird, falls das Rucksignal einen, insbesondere definierten und/oder definierbaren, Schwellwert übersteigt. Zusätzlich kann in diesem Fall auch eine Zeitspanne, während der das Rucksignal den Schwellwert übersteigt, überwacht und/oder ermittelt werden, wodurch vorteilhaft auf eine Art eines Kraftschluss- und/oder Drehmomentabrisses geschlossen werden kann. Übersteigt das Rucksignal dabei den Schwellwert lediglich kurzzeitig, beispielsweise für wenige Millisekunden, so kann insbesondere auf einen temporären Kraftschluss- und/oder Drehmomentabriss im Lenksystem, wie beispielsweise ein Durchrutschen und/oder einen Sprung, geschlossen werden. Übersteigt das Rucksignal den Schwellwert hingegen längerfristig oder dauerhaft, so kann insbesondere auf eine Beschädigung des Lenksystems, wie beispielsweise eine Deformation oder einen Bruch, geschlossen werden.

Des Weiteren wird vorgeschlagen, dass als Betriebssignal ein Lagesignal, ein Geschwindigkeitssignal oder ein Beschleunigungssignal des Lenkaktuators verwendet wird, wodurch das Rucksignal vorteilhaft einfach ermittelt werden kann. Das Lagesignal kann vorteilhaft ein Rotorlagesignal des Lenkaktuators, insbesondere des Elektromotors des Lenkaktuators, sein. Das Geschwindigkeitssignal kann vorteilhaft ein Rotorgeschwindigkeitssignal des Lenkaktuators, insbesondere des Elektromotors des Lenkaktuators, sein. Zudem kann das Beschleunigungssignal vorteilhaft ein Rotorbeschleunigungssignal des Lenkaktuators, insbesondere des Elektromotors des Lenkaktuators, sein.

Bevorzugt wird das Rucksignal anhand einer zeitlichen Änderungsrate des Betriebssignals und/oder mittels einer zeitlichen Ableitung des Betriebssignals ermittelt. Vorteilhaft kann als Betriebssignal dabei ein Lagesignal des Lenkaktuators verwendet und das Rucksignal beispielsweise anhand einer dritten zeitlichen Ableitung des Lagesignals ermittelt werden. Alternativ könnte als Betriebssignal jedoch auch ein Geschwindigkeitssignal des Lenkaktuators verwendet und das Rucksignal beispielsweise anhand einer zweiten zeitlichen Ableitung des Geschwindigkeitssignals ermittelt werden. Zudem könnte als Betriebssignal auch ein Beschleunigungssignal des Lenkaktuators verwendet und das Rucksignal beispielsweise anhand einer ersten zeitlichen Ableitung des Beschleunigungssignals ermittelt werden. Hierdurch kann insbesondere eine vorteilhaft kostengünstige Lösung bereitgestellt werden, indem sowieso vorhandene oder abrufbare Signale verwendet werden.

Ferner entspricht der Kraftschluss- und/oder Drehmomentabriss im Lenksystem einem Kraftschluss- und/oder Drehmomentabriss im Sensorstrang und/oder einem Kraftschluss- und/oder Drehmomentabriss im Servostrang, wodurch insbesondere eine variable und/oder umfassende Überwachung des Lenksystems erreicht werden kann. Der Sensorstrang kann beispielsweise einer Lenkwelle und/oder einer Lenksäule des Lenksystems entsprechen, während der Servostrang insbesondere einem Lenkgetriebe des Lenksystems entsprechen kann.

Der Kraftschluss- und/oder Drehmomentabriss könnte zudem durch ein Durchrutschen, einen Schlupf und/oder einen Sprung einer beliebigen mechanischen Schnittstelle im Lenksystem bewirkt sein. Gemäß einer Ausführungsform wird jedoch vorgeschlagen, dass das Lenksystem zumindest ein, insbesondere kraftund/oder formschlüssig wirkendes, Zugmittel und/oder zumindest einen, insbesondere kraft- und/oder formschlüssig wirkenden, Toleranzring umfasst und der Kraftschluss- und/oder Drehmomentabriss durch ein Durchrutschen, einen Schlupf und/oder einen Sprung des Zugmittels und/oder des Toleranzrings bewirkt wird. Das Zugmittel kann dabei insbesondere Teil eines Kopplungsgetriebes, beispielsweise zur Anbindung des Lenkaktuators an das Lenkgetriebe, und insbesondere als Riemen, bevorzugt als Zahnriemen, ausgebildet sein. Der Toleranzring kann beispielsweise Teil einer Rutschkupplung und/oder eines Schraubradgetriebes sein. Hierdurch kann insbesondere eine Effizienz des Verfahrens erhöht und die Hauptursachen für einen Kraftschluss- und/oder Drehmomentabriss im Lenksystem überwacht werden.

Weiter wird vorgeschlagen, dass zur Ermittlung des Kraftschluss- und/oder Drehmomentabrisses im Lenksystem ein Ereigniszähler verwendet wird. Insbesondere wird in diesem Fall durch Auswertung des Rucksignals und insbesondere anhand einer Signalspitze und/oder Auffälligkeit im Rucksignal zunächst ein Zählerwert des Ereigniszählers inkrementiert und im Fall, dass der Zählerwert des Ereigniszählers einen Grenzwert, beispielsweise drei oder vier, übersteigt, auf einen Kraftschluss- und/oder Drehmomentabriss im Lenksystem geschlossen. Als Folge kann dann eine Systemreaktion, bevorzugt in Form einer Sicherheitsmaßnahme, eingeleitet und/oder ausgeführt werden. Die Systemreaktion kann beispielsweise ein Erzeugen einer Hinweismeldung und/oder eine Degradation des Lenksystems oder des Fahrzeugs umfassen. Besonders bevorzugt wird der Zählerwert des Ereigniszählers zudem zurückgesetzt, insbesondere genullt, falls innerhalb einer definierten und/oder definierbaren Zeit keine Signalspitze und/oder Auffälligkeit im Rucksignal auftritt. Hierdurch kann insbesondere eine Robustheit und/oder eine Betriebssicherheit weiter erhöht werden.

Bevorzugt wird ferner vorgeschlagen, dass bei der Ermittlung des Kraftschlussund/oder Drehmomentabrisses im Lenksystem und insbesondere zur Robustheitssteigerung und/oder Plausibilisierung wenigstens eine Plausibilisierungsgröße berücksichtigt wird. Bevorzugt ist die Plausibilisierungsgröße dabei ein sensorstrangseitiges Betriebs- und/oder Erfassungssignal, wie beispielsweise ein Handmoment und/oder eine Auslenkung der Lenkhandhabe, ein servostrangseitiges Betriebs- und/oder Erfassungssignal, wie beispielsweise ein Drehmoment, ein Drehwinkel, eine Drehzahl, bevorzugt ein Mittelwert einer Rotordrehzahl, und/oder eine Beschleunigung des Lenkaktuators, und/oder ein mit einem Fahrzustand des Fahrzeugs korreliertes Betriebs- und/oder Erfassungssignal, wie beispielsweise eine Fahrzeuggeschwindigkeit und/oder ein Giermoment. Besonders vorteilhaft können bei der Ermittlung des Kraftschluss- und/oder Drehmomentabrisses im Lenksystem auch mehrere Plausibilisierungsgrößen, beispielsweise zumindest zwei oder zumindest drei Plausibilisierungsgrößen, berücksichtig und/oder miteinander verknüpft werden. Hierdurch kann insbesondere eine weitere Erhöhung einer Robustheit erreicht werden.

Eine besonders effizientes Verfahren kann ferner insbesondere erreicht werden, wenn das Lenksystem zumindest ein Zugmittel in Form eines Zahnriemens mit mehreren Zähnen umfasst und der Kraftschluss- und/oder Drehmomentabriss im Lenksystem anhand einer Signalspitze im Rucksignal ermittelt wird, wobei anhand der Anzahl an Signalspitzen im Rucksignal auf eine Anzahl an übersprungenen Zähnen geschlossen wird und/oder eine Anzahl an übersprungenen Zähnen ermittelt wird.

Das Verfahren zur Überwachung des Lenksystems soll hierbei nicht auf die oben beschriebene Anwendung und Ausführungsform beschränkt sein. Insbesondere kann das Verfahren zur Überwachung des Lenksystems zu einer Erfüllung einer hierin beschriebenen Funktionsweise eine von einer hierin genannten Anzahl von einzelnen Elementen, Bauteilen und Einheiten abweichende Anzahl aufweisen.

### Zeichnungen

Weitere Vorteile ergeben sich aus der folgenden Zeichnungsbeschreibung. In den Zeichnungen ist ein Ausführungsbeispiel der Erfindung dargestellt.

Es zeigen:
- Fig. 1a-b: ein beispielhaftes Fahrzeug mit einem Lenksystem in einer vereinfachten Darstellung,
- Fig. 2: ein Schaubild verschiedener Signale zur Überwachung des Lenksystems, und
- Fig. 3: ein beispielhaftes Ablaufdiagramm mit Hauptverfahrensschritten eines Verfahrens zur Überwachung des Lenksystems.

### Beschreibung des Ausführungsbeispiels

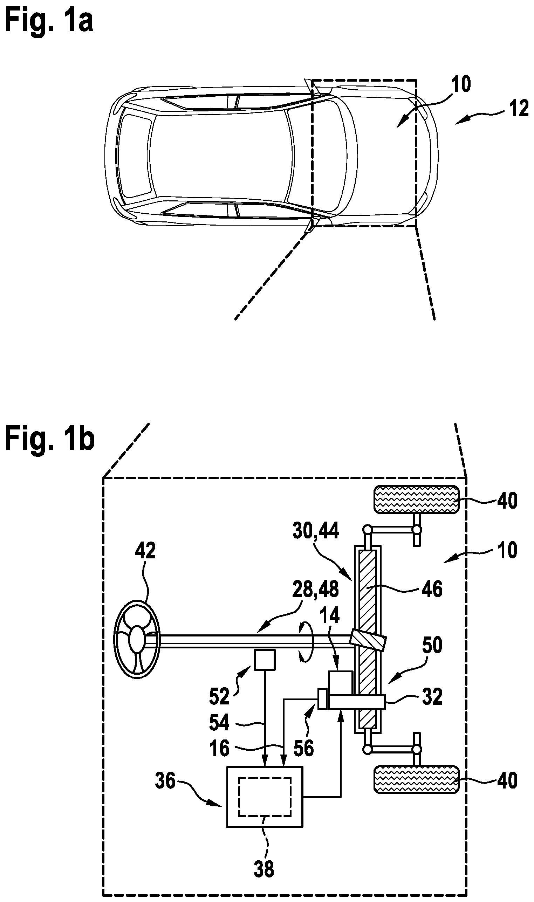

Die Figuren 1a und 1b zeigen ein beispielhaft als Personenkraftfahrzeug ausgebildetes Fahrzeug 12 mit mehreren Fahrzeugrädern 40 und mit einem Lenksystem 10 in einer vereinfachten Darstellung. Das Lenksystem 10 weist eine Wirkverbindung mit den, im vorliegenden Fall insbesondere als Vorderrädern ausgebildeten, Fahrzeugrädern 40 auf und ist zur Beeinflussung einer Fahrtrichtung des Fahrzeugs 12 vorgesehen. Ferner ist das Lenksystem 10 als elektrisch unterstütztes Lenksystem ausgebildet und weist demnach eine elektrische Hilfskraftunterstützung in Form einer Servolenkung auf. Prinzipiell ist jedoch auch denkbar, ein Lenksystem als hydraulisch unterstütztes Lenksystem, insbesondere mit einer hydraulischen Hilfskraftunterstützung, auszubilden. Zudem könnte ein Lenksystem prinzipiell auch als Steer-by-Wire-Lenksystem ausgebildet sein.

Das Lenksystem 10 umfasst eine, im vorliegenden Fall beispielhaft als Lenkrad ausgebildete, Lenkhandhabe 42 zum Aufbringen eines Handmoments, ein beispielhaft als Zahnstangenlenkgetriebe ausgebildetes Lenkgetriebe 44, welches ein Lenkungsstellelement 46 umfasst und dazu vorgesehen ist, eine Lenkvorgabe an der Lenkhandhabe 42 in eine Lenkbewegung der Fahrzeugräder 40 umzusetzen, und eine Lenkwelle 48 zur, insbesondere mechanischen, Verbindung der Lenkhandhabe 42 mit dem Lenkgetriebe 44. Die Lenkwelle 48 definiert einen Sensorstrang 28 des Lenksystems 10. Das Lenkgetriebe 44 definiert einen Servostrang 30 des Lenksystems 10. Alternativ könnte eine Lenkhandhabe auch als Lenkhebel oder Lenkkugel oder dergleichen ausgebildet sein. Zudem ist denkbar, auf eine Lenkhandhabe zu verzichten. Darüber hinaus könnte eine Lenkwelle auch lediglich zeitweise eine Lenkhandhabe mit einem Lenkgetriebe verbinden und/oder eine mechanische Trennung aufweisen, wie beispielsweise bei einem Steer-by-Wire-Lenksystem.

Darüber hinaus umfasst das Lenksystem 10 einen Lenkaktuator 14. Der Lenkaktuator 14 ist zumindest teilweise elektrisch und/oder elektronisch ausgebildet. Der Lenkaktuator 14 weist eine Wirkverbindung mit dem Lenkgetriebe 44 auf. Der Lenkaktuator 14 ist dazu vorgesehen, ein Lenkmoment zur Unterstützung eines an der Lenkhandhabe 42 aufgebrachten Handmoments bereitzustellen und an das Lenkungsstellelement 46 zu übertragen. Dazu umfasst der Lenkaktuator 14 einen Elektromotor (nicht explizit dargestellt). Der Elektromotor ist im vorliegenden Fall insbesondere als permanenterregter Synchronmotor ausgebildet und zur Erzeugung des Lenkmoments vorgesehen. Grundsätzlich könnte ein Lenkaktuator auch mehrere Elektromotoren umfassen.

Zur Anbindung des Lenkaktuators 14 an das Lenkgetriebe 44 umfasst das Lenksystem 10 ferner ein Kopplungsgetriebe 50. Das Kopplungsgetriebe 50 ist im vorliegenden Fall als Zugmitteltrieb ausgebildet und umfasst wenigstens ein Zugmittel 32. Das Kopplungsgetriebe 50 ist dabei als Riementrieb ausgebildet und umfasst folglich ein als Riemen, im vorliegenden Fall insbesondere als Zahnriemen, ausgebildetes Zugmittel 32. Das Kopplungsgetriebe 50 ist dazu vorgesehen, mittels des Zugmittels 32 das Lenkmoment des Lenkaktuators 14 an das Lenkgetriebe 44 zu übertragen. Alternativ könnte ein als Zugmitteltrieb ausgebildetes Kopplungsgetriebe jedoch auch als Kettentrieb oder dergleichen ausgebildet sein und/oder ein als Flachriemen, als Rundriemen, als Keilriemen und/oder als Keilrippenriemen ausgebildetes Zugmittel umfassen. Ferner ist denkbar, ein Kopplungsgetriebe als Schraubradgetriebe und/oder Schneckenradgetriebe auszubilden. Zudem könnte ein Kopplungsgetriebe und/oder ein Lenksystem auch einen Toleranzring umfassen.

Zudem umfasst das Lenksystem 10 eine an der Lenkwelle 48 angeordnete und an sich bekannte Lenksensorik 52. Die Lenksensorik 52 ist vorliegend als Drehmomentsensor ausgebildet. Die Lenksensorik 52 ist dazu vorgesehen, ein mit einer Betätigung der Lenkhandhabe 42 korreliertes Sensorsignal 54, insbesondere ein an der Lenkhandhabe 42 aufgebrachtes Handmoment und/oder Drehmoment, zu erfassen. Im vorliegenden Fall entspricht das Sensorsignal 54 dabei einem Drehstabsignal. Alternativ könnte eine Lenksensorik auch als von einem Drehmomentsensor abweichender Sensor ausgebildet sein, wie beispielsweise als Drehwinkelsensor und/oder als kombinierter Drehmoment- und Drehwinkelsensor.

Ferner umfasst das Lenksystem 10 eine dem Lenkaktuator 14 zugeordnete Erfassungssensorik 56. Die Erfassungssensorik 56 ist als Rotorlagesensor ausgebildet und dazu vorgesehen, zumindest ein Betriebssignal 16 des Lenkaktuators 14, im vorliegenden Fall insbesondere ein Rotorlagesignal des Elektromotors, zu erfassen. Alternativ oder zusätzlich könnte eine Erfassungssensorik jedoch auch als von einem Rotorlagesensor abweichender Sensor ausgebildet sein, wie beispielsweise als Geschwindigkeitssensor und/oder als Beschleunigungssensor.

Des Weiteren weist das Fahrzeug 12 ein Steuergerät 36 auf. Das Steuergerät 36 ist beispielhaft als Lenkungssteuergerät ausgebildet und folglich Teil des Lenksystems 10. Das Steuergerät 36 weist eine elektrische Verbindung mit dem Lenkaktuator 14 auf. Zudem weist das Steuergerät 36 eine elektrische Verbindung mit der Lenksensorik 52 und der Erfassungssensorik 56 auf. Das Steuergerät 36 ist dazu vorgesehen, das Sensorsignal 54 von der Lenksensorik 52 und das Betriebssignal 16 von der Erfassungssensorik 56 zu empfangen. Zudem ist das Steuergerät 36 zu einer Ansteuerung des Lenkaktuators 14 vorgesehen.

Dazu umfasst das Steuergerät 36 eine Recheneinheit 38. Die Recheneinheit 38 umfasst zumindest einen Prozessor, beispielsweise in Form eines Mikroprozessors, und zumindest einen Betriebsspeicher. Zudem umfasst die Recheneinheit 38 zumindest ein im Betriebsspeicher hinterlegtes Betriebsprogramm mit zumindest einer Steuerroutine, zumindest einer Berechnungsroutine, zumindest einer Ermittlungsroutine, zumindest einer Auswerteroutine und zumindest einer Überwachungsroutine. Prinzipiell ist jedoch auch denkbar, ein Steuergerät getrennt von einem Lenksystem auszubilden. In diesem Fall könnte ein Fahrzeug beispielsweise ein einzelnes zentrales Steuergerät mit einer zentralen Recheneinheit aufweisen.

Um eine korrekte Funktionsweise des Lenksystems 10 aufrechtzuerhalten, wird grundsätzlich ein dauerhafter Kraftschluss im Lenksystem 10 benötigt. Allerdings können bestimmte Fahr- und/oder Betriebssituationen zu einem Kraftschlussund/oder Drehmomentabriss im Lenksystem 10 führen. Ein derartiger Kraftschluss- und/oder Drehmomentabriss kann jedoch ohne hinreichend genaue Detektion zu sicherheitskritischen Fahrsituationen führen.

Aus diesem Grund wird im Folgenden ein Verfahren zur Überwachung des Lenksystems 10 während des Betriebs im Fahrzeug 12 beschrieben. Dabei ist insbesondere die Recheneinheit 38 dazu vorgesehen, das Verfahren auszuführen und weist dazu ein Computerprogramm mit entsprechenden Programmcodemitteln auf.

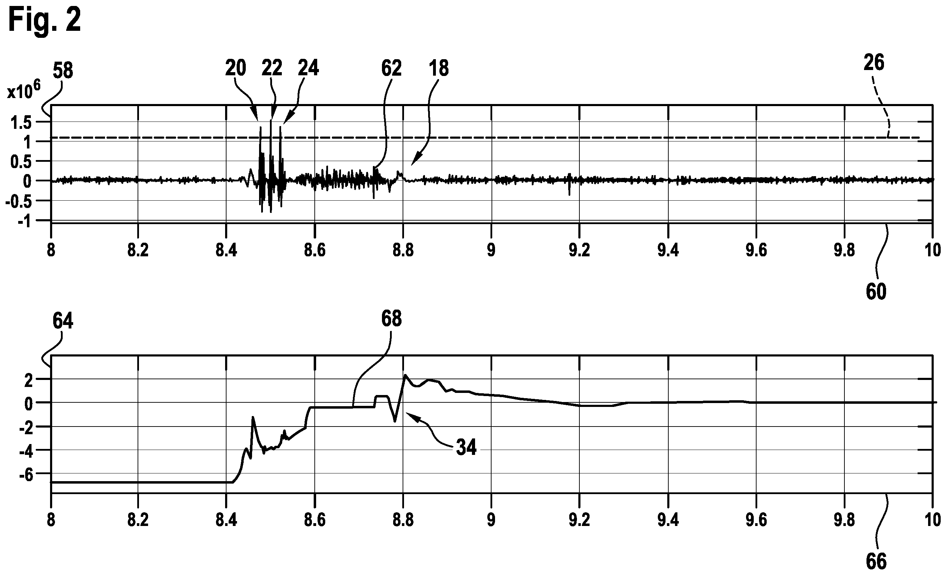

Erfindungsgemäß wird zur Ermittlung eines Kraftschluss- und/oder Drehmomentabrisses im Lenksystem 10 wenigstens ein Betriebssignal des Lenkaktuators 14, im vorliegenden Fall insbesondere das mittels der Erfassungssensorik 56 erfasste Betriebssignal 16, ermittelt und ausgewertet. Dazu wird aus dem Betriebssignal 16 ein Rucksignal 18 erzeugt und auf Änderungen überwacht. Der Kraftschluss- und/oder Drehmomentabriss im Lenksystem 10 kann dabei anhand wenigstens einer Signalspitze 20, 22, 24 im Rucksignal 18 oder anhand eines Übersteigens eines Schwellwert 26 ermittelt werden (vgl. insbesondere Figur 2). Vorliegend wird dabei ausgenutzt, dass bei einem Kraftschluss- und/oder Drehmomentabriss im Lenksystem 10 eine sehr große Rotorbeschleunigung erzeugt wird, welche durch entsprechende Auswertung des Rucksignals 18 ermittelt werden kann. Grundsätzlich könnte das Rucksignal jedoch auch im Frequenzbereich ausgewertet werden. Zudem ist denkbar, ein Gradient des Rucksignals zu überwachen und auszuwerten.

Der Kraftschluss- und/oder Drehmomentabriss entspricht ferner beispielhaft einem Kraftschluss- und/oder Drehmomentabriss im Servostrang 30 und kann durch ein Durchrutschen, einen Schlupf und/oder einen Sprung des Zugmittels 32 bewirkt sein. Grundsätzlich kann ein Kraftschluss- und/oder Drehmomentabriss jedoch auch durch beliebige, andere mechanische Schnittstellen im Lenksystem 10, wie beispielsweise einen Toleranzring, bewirkt sein und beispielsweise im Sensorstrang 28 oder im Sensorstrang 28 und im Servostrang 30 auftreten.

Ferner wird als Betriebssignal 16 beispielhaft ein Lagesignal, insbesondere ein Rotorlagesignal, des Lenkaktuators 14 verwendet, wobei das Rucksignal 18 mittels einer zeitlichen Ableitung des Betriebssignals 16, vorliegend insbesondere anhand einer dritten zeitlichen Ableitung des Betriebssignals 16, ermittelt werden kann. Alternativ könnte als Betriebssignal jedoch auch ein Geschwindigkeitssignal oder ein Beschleunigungssignal eines Lenkaktuators verwendet werden.

Darüber hinaus kann zur Ermittlung des Kraftschluss- und/oder Drehmomentabrisses im Lenksystem 10 ein Ereigniszähler verwendet werden. Der Ereigniszähler kann beispielsweise in die Recheneinheit 38 integriert sein. In diesem Fall wird durch Auswertung des Rucksignals 18 und insbesondere anhand einer Signalspitze 20, 22, 24 und/oder Auffälligkeit im Rucksignal 18 zunächst ein Zählerwert des Ereigniszählers inkrementiert und im Fall, dass der Zählerwert des Ereigniszählers einen Grenzwert, beispielsweise drei oder vier, übersteigt, auf einen Kraftschluss- und/oder Drehmomentabriss im Lenksystem 10 geschlossen. Als Folge kann dann eine Systemreaktion eingeleitet und/oder ausgeführt werden. Die Systemreaktion kann beispielsweise ein Erzeugen einer Hinweismeldung und/oder eine Degradation des Lenksystems 10 oder des Fahrzeugs 12 umfassen. Grundsätzlich könnte auf einen derartigen Ereigniszähler jedoch auch verzichtet werden. In diesem Fall könnte eine entsprechende Systemreaktion bereits bei einer einmaligen Signalspitze und/oder anhand einer Zeitspanne, während der das Rucksignal 18 den Schwellwert 26 übersteigt, erfolgen.

Um eine Robustheit des Verfahrens weiter zu erhöhen, kann bei der Ermittlung des Kraftschluss- und/oder Drehmomentabrisses im Lenksystem 10 zudem wenigstens eine Plausibilisierungsgröße 34 berücksichtigt werden (vgl. insbesondere Figur 2). Als Plausibilisierungsgröße 34 dient im vorliegenden Fall ein servostrangseitiges Betriebs- und/oder Erfassungssignal und zwar insbesondere ein Drehmoment des Lenkaktuators 14. Alternativ oder zusätzlich könnte jedoch auch ein sensorstrangseitiges Betriebs- und/oder Erfassungssignal, wie beispielsweise das Sensorsignal 54 und/oder ein mit einem Fahrzustand des Fahrzeugs 12 korreliertes Betriebs- und/oder Erfassungssignal, wie beispielsweise eine Fahrzeuggeschwindigkeit und/oder ein Giermoment, als Plausibilisierungsgröße verwendet werden. Zudem ist denkbar, ein von einem Drehmoment des Lenkaktuators 14 abweichendes, servostrangseitiges Betriebs- und/oder Erfassungssignal, wie beispielsweise ein Drehwinkel und/oder eine Drehzahl, bevorzugt ein Mittelwert einer Rotordrehzahl, des Lenkaktuators 14, als Plausibilisierungsgröße zu verwenden. Darüber hinaus ist grundsätzlich auch denkbar, auf eine Plausibilisierungsgröße vollständig zu verzichten.

Figur 2 zeigt ein beispielhaftes Schaubild verschiedener Signale zur Überwachung des Lenksystems 10.

Eine erste Ordinatenachse 58 ist als Größenachse ausgebildet und zeigt einen Ruck in [1/s³]. Auf einer ersten Abszissenachse 60 ist eine Zeit in [s] dargestellt. Eine erste Kurve 62 zeigt einen zeitlichen Verlauf des Rucksignals 18. Eine zweite Ordinatenachse 64 ist als weitere Größenachse ausgebildet und zeigt ein Drehmoment in [Nm]. Auf einer zweiten Abszissenachse 66 ist ebenfalls eine Zeit in [s] dargestellt. Eine zweite Kurve 68 zeigt einen zeitlichen Verlauf der Plausibilisierungsgröße 34 bzw. im vorliegenden Fall des Drehmoments des Lenkaktuators 14.

Anhand der Kurve 62 lässt sich erkennen, dass nach etwa 8.5 s mehrere Signalspitzen 20, 22, 24 im Rucksignal 18 auftauchen, welche charakteristisch für einen Kraftschluss- und/oder Drehmomentabriss im Lenksystem 10 sind. Bei der Verwendung eines Zugmittels 32 in Form eines Zahnriemens mit mehreren Zähnen, kann anhand der Anzahl an Signalspitzen 20, 22, 24 im Rucksignal 18 zudem auf eine Anzahl an übersprungenen Zähnen geschlossen werden. Im vorliegenden Fall bedeutet dies, dass drei Zähne des Zugmittels 32 übersprungen wurden.

Die Kurve 68 kann ferner zur Robustheitssteigerung und/oder zur Plausibilisierung des Kraftschluss- und/oder Drehmomentabrisses im Lenksystem 10 genutzt werden. Anhand des Verlaufs der Plausibilisierungsgröße 32 lässt sich erkennen, dass kurz vor der ersten Signalspitze 20 im Rucksignal 18 ein Einbruch des Drehmoments des Lenkaktuators 14 erfolgt. Dieser Einbruch im Drehmoment des Lenkaktuators 14 dient in Zusammenhang mit den zeitlich nachfolgenden Signalspitzen 20, 22, 24 im Rucksignal 18 als Indiz für einen Kraftschlussund/oder Drehmomentabriss im Lenksystem 10.

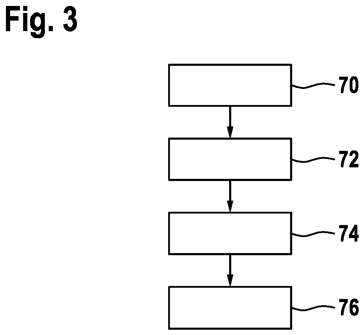

Figur 3 zeigt abschließend ein beispielhaftes Ablaufdiagramm mit Hauptverfahrensschritten des Verfahrens zur Überwachung des Lenksystems 10.

In einem Verfahrensschritt 70 wird das Betriebssignal 16 des Lenkaktuators 14 ermittelt.

In einem Verfahrensschritt 72 wird aus dem Betriebssignal 16 das Rucksignal 18 ermittelt. Im vorliegenden Fall erfolgt dies durch zeitliche Ableitung des Betriebssignals 16, vorliegend insbesondere anhand einer dritten zeitlichen Ableitung des Betriebssignals 16.

In einem Verfahrensschritt 74 wird das Rucksignal 18 überwacht und ausgewertet. Im vorliegenden Fall wird dabei insbesondere überwacht, ob eine Signalspitze 20, 22, 24 im Rucksignal 18 vorliegt und/oder, ob das Rucksignal 18 den Schwellwert 26 übersteigt. Ist dies der Fall, so wird auf einen Kraftschlussund/oder Drehmomentabriss im Lenksystem 10 geschlossen und es folgt ein Verfahrensschritt 76.

Im Verfahrensschritt 76 wird eine Systemreaktion eingeleitet und/oder ausgeführt. Die Systemreaktion kann beispielsweise ein Erzeugen einer Hinweismeldung und/oder eine Degradation des Lenksystems 10 oder des Fahrzeugs 12 umfassen.

Das beispielhafte Ablaufdiagramm in Figur 3 soll dabei lediglich beispielhaft ein Verfahren zur Überwachung des Lenksystems 10 beschreiben. Insbesondere können einzelne Verfahrensschritte auch variieren oder zusätzliche Verfahrensschritte hinzukommen. Beispielsweise kann zur Ermittlung des Kraftschlussund/oder Drehmomentabrisses im Lenksystem 10 ein Ereigniszähler verwendet werden. Ferner kann bei der Ermittlung des Kraftschluss- und/oder Drehmomentabrisses im Lenksystem 10 die Plausibilisierungsgröße 34 berücksichtigt werden.

## Patentansprüche

1. Verfahren zur Überwachung eines Lenksystems (10), insbesondere während des Betriebs in einem Fahrzeug (12), wobei das Lenksystem (10) zumindest einen Lenkaktuator (14) umfasst, und wobei zur Ermittlung eines Kraftschluss- und/oder Drehmomentabrisses im Lenksystem (10) wenigstens ein Betriebssignal (16) des Lenkaktuators (14) ermittelt und ausgewertet wird, **dadurch gekennzeichnet, dass** zur Ermittlung des Kraftschlussund/oder Drehmomentabrisses im Lenksystem (10) aus dem Betriebssignal (16) ein Rucksignal (18) ermittelt und auf Änderungen überwacht wird.

2. Verfahren nach Anspruch 1, **dadurch gekennzeichnet, dass** der Kraftschluss- und/oder Drehmomentabriss im Lenksystem (10) anhand wenigstens einer Signalspitze (20, 22, 24) im Rucksignal (18) ermittelt wird und/oder, dass der Kraftschluss- und/oder Drehmomentabriss im Lenksystem (10) ermittelt wird, falls das Rucksignal (18) einen Schwellwert (26) übersteigt.

3. Verfahren nach Anspruch 1 oder 2, **dadurch gekennzeichnet, dass** als Betriebssignal (16) ein Lagesignal, ein Geschwindigkeitssignal oder ein Beschleunigungssignal des Lenkaktuators (14) verwendet wird.

4. Verfahren nach einem der vorhergehenden Ansprüche, **dadurch gekennzeichnet, dass** das Rucksignal (18) anhand einer zeitlichen Änderungsrate des Betriebssignals (16) und/oder mittels einer zeitlichen Ableitung des Betriebssignals (16) ermittelt wird.

5. Verfahren nach einem der vorhergehenden Ansprüche, **dadurch gekennzeichnet, dass** der Kraftschluss- und/oder Drehmomentabriss im Lenksystem (10) einem Kraftschluss- und/oder Drehmomentabriss im Sensorstrang (28) und/oder einem Kraftschluss- und/oder Drehmomentabriss im Servostrang (30) entspricht.

6. Verfahren nach einem der vorhergehenden Ansprüche, **dadurch gekennzeichnet, dass** das Lenksystem (10) zumindest ein Zugmittel (32) und/oder zumindest einen Toleranzring umfasst und der Kraftschlussund/oder Drehmomentabriss durch ein Durchrutschen, einen Schlupf und/oder einen Sprung des Zugmittels (32) und/oder des Toleranzrings bewirkt wird.

7. Verfahren nach einem der vorhergehenden Ansprüche, **dadurch gekennzeichnet, dass** zur Ermittlung des Kraftschluss- und/oder Drehmomentabrisses im Lenksystem (10) ein Ereigniszähler verwendet wird und im Fall, dass ein Zählerwert des Ereigniszählers einen Grenzwert übersteigt, eine Systemreaktion eingeleitet wird.

8. Verfahren nach einem der vorhergehenden Ansprüche, **dadurch gekennzeichnet, dass** bei der Ermittlung des Kraftschluss- und/oder Drehmomentabrisses im Lenksystem (10) wenigstens eine Plausibilisierungsgröße (34) berücksichtigt wird, wobei die Plausibilisierungsgröße (34) ein sensorstrangseitiges Betriebs- und/oder Erfassungssignal, ein servostrangseitiges Betriebs- und/oder Erfassungssignal und/oder ein mit einem Fahrzustand des Fahrzeugs (12) korreliertes Betriebs- und/oder Erfassungssignal ist.

9. Verfahren zumindest nach Anspruch 1, **dadurch gekennzeichnet, dass** das Lenksystem (10) zumindest ein Zugmittel (32) in Form eines Zahnriemens mit mehreren Zähnen umfasst und der Kraftschluss- und/oder Drehmomentabriss im Lenksystem (10) anhand einer Signalspitze (20, 22, 24) im Rucksignal (18) ermittelt wird, wobei anhand der Anzahl an Signalspitzen (20, 22, 24) im Rucksignal (18) auf eine Anzahl an übersprungenen Zähnen geschlossen wird.

10. Steuergerät (36) mit einer Recheneinheit (38) zur Durchführung eines Verfahrens nach einem der vorhergehenden Ansprüche.

11. Lenksystem (10) mit zumindest einem Lenkaktuator (14) und mit einer Recheneinheit (38) zur Durchführung eines Verfahrens nach einem der Ansprüche 1 bis 9.

12. Fahrzeug (12), insbesondere Kraftfahrzeug, mit einem Lenksystem (10) nach Anspruch 11.

## Claims

1. Method for monitoring a steering system (10), in particular during operation in a vehicle (12), wherein the steering system (10) comprises at least one steering actuator (14), and wherein, in order to determine a sudden reduction in frictional engagement and/or torque in the steering system (10), at least one operating signal (16) of the steering actuator (14) is determined and evaluated, **characterized in that**, in order to determine the sudden reduction in frictional engagement and/or torque in the steering system (10), a jerk signal (18) is determined from the operating signal (16) and is monitored for changes.

2. Method according to Claim 1, **characterized in that** the sudden reduction in frictional engagement and/or torque in the steering system (10) is determined on the basis of at least one signal peak (20, 22, 24) in the jerk signal (18), and/or **in that** the sudden reduction in frictional engagement and/or torque in the steering system (10) is determined if the jerk signal (18) exceeds a threshold value (26).

3. Method according to Claim 1 or 2, **characterized in that** a position signal, a speed signal or an acceleration signal of the steering actuator (14) is used as the operating signal (16).

4. Method according to one of the preceding claims, **characterized in that** the jerk signal (18) is determined on the basis of a rate of change over time of the operating signal (16) and/or on the basis of a time derivative of the operating signal (16).

5. Method according to one of the preceding claims, **characterized in that** the sudden reduction in frictional engagement and/or torque in the steering system (10) corresponds to a sudden reduction in frictional engagement and/or torque in the sensor section (28) and/or a sudden reduction in frictional engagement and/or torque in the servo section (30).

6. Method according to one of the preceding claims, **characterized in that** the steering system (10) comprises at least one traction means (32) and/or at least one tolerance ring, and the sudden reduction in frictional engagement and/or torque is caused by a slipping, sliding and/or a jump of the traction means (32) and/or of the tolerance ring.

7. Method according to one of the preceding claims, **characterized in that** an event counter is used for determining the sudden reduction in frictional engagement and/or torque in the steering system (10) and, in the event of a counter value of the event counter exceeding a limit value, a system response is initiated.

8. Method according to one of the preceding claims, **characterized in that**, when determining the sudden reduction in frictional engagement and/or torque in the steering system (10), at least one plausibility variable (34) is considered, wherein the plausibility variable (34) is a sensor-section-side operating and/or sensing signal, a servo-section-side operating and/or sensing signal and/or an operating and/or sensing signal correlated with a driving state of the vehicle (12).

9. Method according to at least Claim 1, **characterized in that** the steering system (10) comprises at least one traction means (32) in the form of a toothed belt with multiple teeth and the sudden reduction in frictional engagement and/or torque in the steering system (10) is determined on the basis of a signal peak (20, 22, 24) in the jerk signal (18), wherein on the basis of the number of signal peaks (20, 22, 24) in the jerk signal (18) a number of skipped teeth is inferred.

10. Control device (36) with a computing unit (38) for carrying out a method according to one of the preceding claims.

11. Steering system (10) with at least one steering actuator (14) and with a computing unit (38) for carrying out a method according to one of Claims 1 to 9.

12. Vehicle (12), in particular a motor vehicle, with a steering system (10) according to Claim 11.

## Revendications

1. Procédé de surveillance d'un système de direction (10), notamment pendant le fonctionnement dans un véhicule (12), le système de direction (10) comprenant au moins un actionneur de direction (14), et au moins un signal de fonctionnement (16) de l'actionneur de direction (14) étant déterminé et évalué pour déterminer une rupture d'adhérence et/ou de couple dans le système de direction (10), **caractérisé en ce que**, pour déterminer la rupture d'adhérence et/ou de couple dans le système de direction (10), on détermine à partir du signal de fonctionnement (16) un signal de secousse (18) et on surveille les modifications.

2. Procédé selon la revendication 1, **caractérisé en ce que** la rupture d'adhérence et/ou de couple dans le système de direction (10) est déterminée à l'aide d'au moins une pointe de signal (20, 22, 24) dans le signal de secousse (18) et/ou **en ce que** la rupture d'adhérence et/ou de couple dans le système de direction (10) est déterminée si le signal de secousse (18) dépasse une valeur seuil (26).

3. Procédé selon la revendication 1 ou 2, **caractérisé en ce que** l'on utilise en tant que signal de fonctionnement (16) un signal de position, un signal de vitesse ou un signal d'accélération de l'actionneur de direction (14).

4. Procédé selon l'une quelconque des revendications précédentes, **caractérisé en ce que** le signal de secousse (18) est déterminé à l'aide d'un taux de variation dans le temps du signal de fonctionnement (16) et/ou au moyen d'une dérivée par rapport au temps du signal de fonctionnement (16).

5. Procédé selon l'une quelconque des revendications précédentes, **caractérisé en ce que** la rupture d'adhérence et/ou de couple dans le système de direction (10) correspond à une rupture d'adhérence et/ou de couple dans la chaîne de capteurs (28) et/ou à une rupture d'adhérence et/ou de couple dans la chaîne d'asservissement (30).

6. Procédé selon l'une quelconque des revendications précédentes, **caractérisé en ce que** le système de direction (10) comprend au moins un moyen de traction (32) et/ou au moins une bague de tolérance et la rupture d'adhérence et/ou de couple est provoquée par un glissement, un patinage et/ou un saut du moyen de traction (32) et/ou de la bague de tolérance.

7. Procédé selon l'une quelconque des revendications précédentes, **caractérisé en ce que** pour déterminer la rupture d'adhérence et/ou de couple dans le système de direction (10), on utilise un compteur d'événements et, dans le cas où une valeur de compteur du compteur d'événements dépasse une valeur limite, on déclenche une réaction du système.

8. Procédé selon l'une quelconque des revendications précédentes, **caractérisé en ce que** lors de la détermination de la rupture d'adhérence et/ou de couple dans le système de direction (10), au moins une grandeur de plausibilité (34) est prise en compte, la grandeur de plausibilité (34) étant un signal de fonctionnement et/ou de détection côté chaîne de capteurs, un signal de fonctionnement et/ou de détection côté chaîne d'asservissement et/ou un signal de fonctionnement et/ou de détection corrélé à un état de conduite du véhicule (12).

9. Procédé au moins selon la revendication 1, **caractérisé en ce que** le système de direction (10) comprend au moins un moyen de traction (32) sous la forme d'une courroie dentée avec plusieurs dents et la rupture d'adhérence et/ou de couple dans le système de direction (10) est déterminée à l'aide d'une pointe de signal (20, 22, 24) dans le signal de secousse (18), le nombre de pointes de signal (20, 22, 24) dans le signal de secousse (18) permettant de conclure à un nombre de dents sautées.

10. Appareil de commande (36) avec une unité de calcul (38) pour la mise en œuvre d'un procédé selon l'une quelconque des revendications précédentes.

11. Système de direction (10) avec au moins un actionneur de direction (14) et avec une unité de calcul (38) pour la mise en œuvre d'un procédé selon l'une quelconque des revendications 1 à 9.

12. Véhicule (12), notamment véhicule automobile, avec un système de direction (10) selon la revendication 11.
